# EUROPÄISCHE PATENTANMELDUNG

(11) **EP 2 355 229 A1**
(43) Veröffentlichungstag der Anmeldung: **10.08.2011**
(21) Anmeldenummer: 10001270.7
(22) Anmeldetag: 08.02.2010
(51) Int. Cl.: H01M 10/42, H01M 10/48, H02J 7/00

(54) **Hochstrombatteriesystem und Verfahren zur Steuerung eines Hochstrombatteriesystems**

(71) Anmelder: Fortu Intellectual Property AG, 6060 Sarnen (CH)
(72) Erfinder: Hambitzer, Günther, 53115 Bonn (DE); Heitbaum, Joachim, 53115 Bonn (DE); Borck, Markus, 70327 Stuttgart (DE); Ripp Dr., Christiane, 76327 Pfinztal (DE)
(74) Vertreter: Durm & Partner

(57) **Zusammenfassung**

Die vorliegende Erfindung betrifft ein Hochstrombatteriesystem (1), in dem ein hoher Betriebsstrom fließt, insbesondere für Fahrzeugantriebe. Das Hochstrombatteriesystem (1) hat eine Batteriesystemüberwachungselektronik (12) und eine Mehrzahl von Batteriemodulen (4), die jeweils mindestens eine wiederaufladbare Batteriezelle (10) einschließen und die derartig mittels einer Betriebsstromleitung (5) elektrisch in Reihe geschaltet sind, dass im Betrieb ein Betriebsstrom durch die Betriebsstromleitung (5) fließt. Mindestens eines der Batteriemodule (4) ist als Bypass-Batteriemodul (6) ausgebildet, das einen Bypassschalter (7) und eine Bypassleitung (8) aufweist, die so ausgebildet und angeordnet sind, dass nach Umschalten des Bypassschalters (7) von einer Normalbetriebsstellung in eine Bypassstellung das Batteriemodul (6) durch die Bypassleitung (8) elektrisch überbrückt ist, so dass der Betriebsstrom durch die Bypassleitung (8) fließt. Die Batteriesystemüberwachungselektronik (12) schließt für jedes Bypass-Batteriemodul (6) eine Modulüberwachungseinheit (11) ein, die das zugeordnete Batteriemodul (6) überwacht und einen Fehlerzustand des Moduls (6) detektiert. Die Batteriesystemüberwachungselektronik (12) misst bei Detektion eines Fehlerzustands eines Batteriemoduls (6) durch eine der Modulüberwachungseinheiten (11) den Stromfluss in der Betriebsstromleitung (5) und schaltet den Bypassschalter (7) des betreffenden Batteriemoduls (6) von der Normalbetriebsstellung in die Bypassstellung zu einem Zeitpunkt um, zu dem der Stromfluss in der Betriebsstromleitung (5) kleiner als ein vorbestimmter Grenzwert ist.

## Beschreibung

Die vorliegende Erfindung betrifft ein Hochstrombatteriesystem, in dem ein hoher Betriebsstrom fließt und das insbesondere für Fahrzeugantriebe geeignet ist. Das Hochstrombatteriesystem umfasst eine Mehrzahl von Batteriemodulen, die jeweils mindestens eine wiederaufladbare Batteriezelle (Akkumulatorzelle) einschließen und die derartig mittels einer Betriebsstromleitung elektrisch in Reihe geschaltet sind, dass im Betrieb ein Betriebsstrom durch die Betriebsstromleitung fließt.

Hochstrombatteriesysteme finden in vielen mobilen Geräten Anwendung, bei denen eine hohe Kapazität gefordert ist und hohe Ströme im Bereich von mehreren zehn oder hundert Ampere fließen können. Beispiele für den Einsatz von Hochstrombatteriesystemen sind mobile Werkzeuge oder auch Fahrzeuge, insbesondere Elektrofahrzeuge, bei denen in der Regel Maximalströme im Bereich von 100 A bis ca. 400 A fließen. Aber auch bei anderen elektrischen Geräten, insbesondere solchen, die einen Motor umfassen und für den Start des Motors hohe Ströme erfordern, ist ein Hochstrombatteriesystem erforderlich.

Es ist im Stand der Technik bekannt, dass beim Einsatz von Batteriesystemen eine Überwachung von einzelnen Batteriezellen notwendig ist, um Risiken einer Beschädigung oder Zerstörung der Batterien zu vermeiden, die beispielsweise durch Überladen oder durch Fehler innerhalb der Batterie auftreten können.

Um bei einem Batteriesystem mit mehreren wiederaufladbaren Batterien (Akkumulatoren) ein Überladen einzelner Zellen zu vermeiden, schlägt die DE 10 2004 013 351 A1 eine Vorrichtung zur Ladeverteilung und Überwachung von mehreren Akkumulatoren vor, die in Serie geschaltet sind. Die einzelnen Akkumulatoren werden überwacht, indem die während des Ladens anliegende Spannung, der Spannungsgradient und die Temperatur erfasst werden. Beim Auftreten eines Fehlers wird der entsprechende Akkumulator durch eine regelbare Impedanz überbrückt, wobei eine Unterbrechung oder Reduzierung der Ladestromversorgung stattfindet und ein Bypass geschaltet wird.

Nicht nur beim Laden, insbesondere beim Überladen, sondern auch im Betrieb können gefährliche Zustände auftreten. Im Stand der Technik ist bekannt, unterschiedliche Betriebszustände von Batterien und Batteriesystemen zu überwachen und beim Auftreten eines Fehlerzustands eine fehlerhafte Batterie aus einem Betriebssystem zu entkoppeln. Einen Vorschlag für ein derartiges Batteriemanagementsystem macht beispielsweise die US 2008/0084182 A1.

Die US 2007/0212596 A1 befasst sich mit einer Sicherheitsabschaltung von Batteriesystemen mit einzelnen oder mehreren Batteriezellen, insbesondere mit Lithiumionenbatterien, wenn bestimmte überwachte Parameter von Sollwerten abweichen. Beispielsweise wird die Temperatur der Batterien überprüft. Alle Zellen können elektronisch abgeschaltet werden, wenn wenigstens eine der Zellen eine vorgegebene Temperatur überschreitet. Eine Kontrolleinrichtung kann alternativ oder zusätzlich den Ladezustand und den Ladezyklus der Zellen überwachen. Daneben können auch die Spannung und/oder die innere Impedanz der elektrochemischen Zellen überwacht werden.

Die US 2002/0074861 A1 schlägt eine Vorrichtung zum Trennen einer Batterie in einem Fahrzeug vor. Im Fehlerfall, wenn beim Auftreten eines Kurzschlusses, eines Feuers, eines Unfalls oder einer ähnlichen Situation die Sicherheit des Fahrzeugs oder der Insassen gefährdet ist, wird die Batterie in dem Fahrzeug abgeschaltet. Darüber hinaus ist vorgesehen, die Abschalt-Vorrichtung aktivieren und deaktivieren zu können, so dass verhindert wird, dass das Fahrzeug unbeweglich wird. Alternativ ist ein Kondensator vorgesehen, damit das Fahrzeug auch im Falle eines Kurzschlusses oder eines Spannungsabfalls an der Batterie nicht ohne Spannungsversorgung bleibt und eine Sicherheitsabschaltung durchgeführt werden kann. Bevorzugt erfolgt diese Sicherheitsabschaltung durch einen Transistor, der als Schalter arbeitet und die Batterie abtrennt

In vielen Einsatzgebieten der Batterien, beispielsweise im Elektrofahrzeug muss im Falle eines Fehlers die Batterie möglichst bald und zuverlässig abgeschaltet werden. Daher wird im Stand der Technik zum Trennen oder Überbrücken der fehlerhaften Batterie ein Hochstromschalter verwendet, der die hohen Betriebsströme der Batterie schalten kann. Nachteilig sind jedoch die hohen Kosten des Hochstromschalters. Zudem muss für jede Batterie bzw. jede Batteriezelle ein separater Schalter verwendet werden, was die Kosten insbesondere beim Einsatz einer Vielzahl von Batteriezellen in Elektrofahrzeugen entsprechend vervielfacht.

Neben der Verwendung von Hochstromschaltem ist auch bekannt, die Zuführleitung bzw. die Betriebsstromleitung einer einzelnen Batteriezelle zu zerstören, beispielsweise abzusprengen, um im Falle eines gravierenden Fehlers jedenfalls eine Abschaltung herbeizuführen.

Auf dieser Grundlage liegt der Erfindung das Problem zugrunde, ein verbessertes Hochstrombatteriesystem vorzuschlagen, bei dem einzelne Batteriemodule überwacht und im Falle des Erkennens eines Fehlerzustands abgeschaltet werden.

Gelöst wird das Problem durch ein Hochstrombatteriesystem mit den Merkmalen des Anspruchs 1 sowie durch ein Verfahren zur Steuerung eines Hochstrombatteriesystems mit den Merkmalen des Anspruchs 13. Die auf die unabhängigen Ansprüche rückbezogenen Unteransprüche stellen bevorzugte, nicht selbstverständliche Ausführungsformen des erfindungsgemäßen Hochstrombatteriesystems bzw. des erfindungsgemäßen Verfahrens dar.

In dem efindungsgemäßen Hochstrombatteriesystem fließt ein hoher Betriebsstrom. Sein Maximalwert liegt in der Regel bei mindestens mehreren zehn Ampere, häufig im Bereich von 100 bis etwa 400 A. Der Betriebsstrom ist ein Ladestrom, bei dem das Hochstrombatteriesystem geladen wird oder ein Entladestrom, bei dem Energie aus dem Hochstrombatteriesystem entnommen wird. Derartige Hochstrombatteriesysteme eignen sich insbesondere für Fahrzeugantriebe, beispielsweise für Elektrokraftfahrzeuge. Im Folgenden wird ohne Beschränkung der Allgemeinheit auf ein Hochstrombatteriesystem für Fahrzeugantriebe Bezug genommen und die Erfindung anhand eines derartigen Antriebs bzw. eines Elektrofahrzeugs näher erläutert.

Das Hochstrombatteriesystem umfasst eine Batteriesystemüberwachungselektronik und eine Mehrzahl von Batteriemodulen. Jedes Batteriemodul schließt mindestens eine wiederaufladbare Batteriezelle ein. Eine Batteriezelle, die auch als Akkumulatorzelle bezeichnet wird, enthält eine positive Elektrode und eine negative Elektrode sowie eine Elektrolytlösung. Ein Batteriemodul kann mehrere Einzelzellen umfassen.

Die Mehrzahl der Batteriemodule des Hochstrombatteriesystems ist mit einer Betriebsstromleitung elektrisch in Reihe geschaltet, so dass im Betrieb des Hochstrombatteriesystems der Betriebsstrom (Entladestrom oder ein Ladestrom) durch die Betriebsstromleitung fließt. Die Betriebsstromteitung verbindet mindestens zwei benachbarte Batteriemodule. Im Sinne der Erfindung wird als Betriebsstromleitung jedoch auch die Leitung innerhalb des Hochstrombatteriesystems bezeichnet, die zu den Verbraucheranschlüssen des Batteriesystems führt.

Mindestens eines der Batteriemodule des Hochstrombatteriesystems ist als Bypass-Batteriemodul ausgebildet. Es umfasst einen Bypassschalter und eine Bypassleitung. Der Bypassschalter ist in einer Normalbetriebsstellung derart geschaltet, dass der Betriebsstrom durch das zugehörige (Bypass-) Batteriemodul fließt. Die Bypassleitung ist derart ausgebildet und angeordnet, dass nach Umschalten des Bypassschalters von der Normalbetriebsstellung in eine Bypassstellung das Bypass-Batieriemodul durch die Bypassleitung elektrisch überbrückt wird. Der Betriebsstrom fließt in der Bypassstellung des Schalters durch die Bypassleitung und nicht mehr durch das Bypass-Batteriemodul. Das Hochstrombatteriesystem umfasst für jedes Bypass-Batteriemodul eine Modulüberwachungseinheit, die das zugehörige Bypass-Batteriemodul überwacht und einen Fehlerzustand des Moduls detektiert.

Das erfindungsgemäße Verfahren umfasst folgende Schritte:

Mittels der Modulüberwachungseinheit des Hochstrombatteriesystems werden die Bypass-Batteriemodule des Systems überwacht. Beim Auftreten eines Fehlerzustands eines der Batteriemodule wird dieser Zustand detektiert. Die Batteriesystemüberwachungselektronik misst den Stromfluss in der Betriebsstromleitung. Im Fehlerfall eines Batteriemoduls wird dann überprüft, ob der Stromfluss in der Betriebsstromleitung kleiner als ein vorbestimmter Grenzwert ist, der in der Regel in Abhängigkeit von dem verwendeten Bypassschalter des Hochstrombatteriesystems definiert ist. Sobald der Stromfluss kleiner als der Grenzwert ist, wird der Bypassschalter von einer Normalbetriebsstellung in eine Bypassstellung geschaltet, so dass das (zugehörige) Bypass-Batteriemodul, bei dem ein Fehlerzustand detektiert wurde, elektrisch derart überbrückt wird, dass der Betriebsstrom durch die Bypassleitung fließt. In diesem Fall fließt der Betriebsstrom also nicht durch das fehlerhafte Batteriemodul, sondern an ihm vorbei. Die intakten Batteriemodule des Hochstrombatteriesystems werden nach wie vor von dem Betriebsstrom durchflossen.

Die Batteriesystemüberwachungselektronik schließt neben eventuellen weiteren Komponenten alle Modulüberwachungseinheiten der zu überwachenden Batteriemodule ein. Durch die Batteriesystemüberwachungselektronik werden alle Funktionen zur Verfügung gestellt, die zur Überwachung und Steuerung des Hochstrombatteriesystems erforderlich sind. Sie kann insbesondere einen Mikroprozessor oder andere Hardware einschließen. Ihre Funktionen können teilweise mittels Software realisiert sein. Bevorzugt können auch zusätzliche Funktionen von ihr ausgeführt werden, beispielsweise zur Kommunikation mit Modulen oder Bauelemente außerhalb des Hochstrombatteriesystems.

Beim Detektieren eines Fehlerzustands eines Bypassbatteriemoduls wird mittels der Batteriesystemüberwachungselektronik der Stromfluss in der Betriebsstromleitung gemessen. Diese Detektion erfolgt durch eine Komponente der Batteriesystemüberwachungselektronik. Bevorzugt wird sie mittels der Modulüberwachungseinheit des fehlerhaften Batteriemoduls durchgeführt. Die einzelnen Modulüberwachungseinheiten können dabei unabhängig voneinander und autark arbeiten. Sie können derart ausgebildet sein, dass sie den Stromfluss messen, den Vergleich mit dem vordefinierten Grenzwert durchführen und/oder den Bypassschalter derart steuern, dass er von der Normalbetriebsstellung in die Bypassstellung schaltet. In diesem Fall haben sie vorzugsweise jeweils einen eigenen Mikroprozessor. Alternativ können einige oder alle dieser Funktionen auch von einer gesonderten Komponente der Batteriesystemüberwachungselektronik ausgeführt werden.

Die Modulüberwachungseinheiten können ebenfalls in Hardware und optional teilweise in Software realisiert sein. Selbstverständlich können die elektronischen Komponenten je nach den Anforderungen in einer oder mehreren Baueinheiten zusammengefasst sein. Insbesondere kann jedem Batteriemodul eine Modulüberwachungseinheit als gesonderte Baueinheit zugeordnet sein. Die Modulüberwachungseinheiten können beispielsweise den gemessenen Stromfluss in der Betriebsstromleitung an eine Komponente (z.B. den Mikroprozessor) der Batteriesystemüberwachungselektronik übermitteln, so dass der Mikroprozessor der Batteriesystemüberwachungselektronik den Vergleich mit dem vordefinierten Grenzwert durchführt, der beispielsweise in einem Speicher der Batteriesystemüberwachungselektronik gespeichert ist.

Bevorzugt sind die Modulüberwachungseinheiten mit Ausnahme der notwendigen Sensoren in eine Zentraleinheit der Batteriesystemüberwachungselektronik integriert. Die räumliche Integration kann vorteilhaft sein, da ein besonders kompakter Aufbau möglich ist und mehrere Modulüberwachungseinheiten zusammengefasst werden können. Die Batteriemodule weisen in dieser Ausführungsform nur die notwendigen Sensoren zum Erfassen eines Fehlerzustands auf (z.B. Temperatursensor). Die Weiterverarbeitung der Messwerte erfolgt in der Zentraleinheit der Batteriesystemüberwachungselektronik.

Jede Modulüberwachungseinheit überwacht ein zugeordnetes Batteriemodul und detektiert einen auftretenden Fehlerzustand. Ein Fehlerzustand des Batteriemoduls kann ein Abweichen eines Betriebsparameters oder Betriebswertes von einem Normalwert oder Sollwert sein. Als Fehlerzustand wird auch ein technischer Fehler oder Defekt beispielsweise eine Überhitzung, eine Leckage oder das Auftreten eines Überdrucks an dem Batteriemodul eingestuft. Zur Überwachung des Batteriemoduls werden einzelne Parameter wie beispielsweise die Spannung, der Strom, der Ladezyklus oder die Temperatur gemessen bzw. beobachtet und mit Sollwerten verglichen. Ein Fehlerzustand wird detektiert, sobald ein überwachter Messwert von einem Sollwert abweicht und außerhalb eines Toleranzbereichs liegt, so dass für die Batteriezelle oder das Batteriemodul die Gefahr gegeben ist, dass es beschädigt wird, sich entzündet oder explodiert. Eine Fehlerdetektion und die notwendigen Sensoren sind dem Fachmann beispielsweise aus dem obengenannten Stand der Technik, insbesondere aus der DE 10 2004 013 351 A1 bekannt.

Das Hochstrombatteriesystem eines Elektrofahrzeugs wird sehr wechselhaft betrieben. Beim konstanten Fahren und Beschleunigen wird aus dem Batteriesystem Strom entnommen, so dass ein Entladestrom zu dem Antriebsmotor des Elektrofahrzeugs fließt. Beim Bremsen des Fahrzeugs wird Bremsenergie zum Laden des Batteriesystems genutzt, so dass ein Ladestrom zu dem Hochstrombatteriesystem fließt. Durch den Wechsel zwischen Fahrbetrieb und Bremsbetrieb entstehen immer wieder Betriebszustände, bei denen der in der Zuleitung zwischen Elektromotor und Batteriesystem fließende Strom gering ist Häufig sinkt der Betriebsstrom auf Null ab, so dass das Hochstrombatteriesystem stromlos ist. Es kommen also in der Praxis bei elektrischen Fahrzeugantrieben häufig Betriebszustände vor, in denen der Betriebsstrom in der Betriebsstromleitung unterhalb des Grenzwertes liegt. Diese Zustände treten für eine Zeitdauer auf, die ausreichend groß ist, um den Bypassschalter umzuschalten und um ein defektes Batteriemodul zu überbrücken.

Diese Erkenntnis macht sich die Erfindung zunutze. Bei Detektion eines Fehlerzustands des Batteriemoduls durch eine der Modulüberwachungseinheiten misst bevorzugt die Batteriesystemüberwachungselektronik den Stromfluss in der Betriebsstromleitung und veranlasst den Bypassschalter des betreffenden Batteriemoduls von der Normalbetriebsstellung in die Bypassstellung zu einem Zeitpunkt umzuschalten, zu dem der Stromfluss in der Betriebsstromleitung kleiner als ein vorbestimmter Grenzwert ist.

Abhängig von den Erfordernissen des Einzelfalls, sollte die Abschaltung eines Batteriemoduls innerhalb einer relativ kurzen Zeit von bevorzugt kleiner einer Minute, besonders bevorzugt innerhalb weniger Sekunden (höchstens zehn Sekunden) erfolgen. Dazu wird der Bypass geschaltet, um das defekte Modul elektrisch abzukoppeln und den Stromfluss durch die anderen (intakten) Batteriemodule zu gewährleisten. Nicht in allen Fällen kann garantiert werden, dass spontan ein Betriebszustand mit einem Betriebsstrom unterhalb des Grenzwertes innerhalb der gewünschten Zeitdauer eintritt. Dieser Zustand kann auch gesteuert herbeigeführt werden. Hierzu kann das gesamte Hochstrombatteriesystem mit den Batteriemodulen kurzzeitig von der Last oder Ladung (beispielsweise von dem Elektromotor) abgetrennt werden. Das Abtrennen erfolgt so lange, bis der Bypassschalter des Systems umgeschaltet und das fehlerhafte Batteriemodul überbrückt ist.

In einer bevorzugten Ausführungsform des Hochstrombatteriesystems wird zur Herstellung dieses Niederstrom-Betriebszustands, bei dem in dem Batteriesystem der Betriebsstrom kleiner des Grenzwerts ist, eine Verbraucherstromsteuerung verwendet. Diese Steuerung steuert den Stromfluss zwischen dem Hochstrombatteriesystem und dem Verbraucher derart, dass der Strom in der Betriebsstromleitung unterhalb des Grenzwerts liegt. Im Rahmen der Erfindung wurde erkannt, dass hierzu vorteilhaft die bei einem Elektrofahrzeug vorhandene Elektromotorsteuerung verwendet werden kann, mit der ein von einem elektronischen Gaspedal als Geber erzeugte Sollwert eingeregelt wird. Die Elektromotorsteuerung regelt den Elektromotor des Fahrzeugs so, dass bei einem Fahrbetrieb und Beschleunigungsbetrieb Strom aus dem Hochstrombatteriesystem entnommen wird. Bei einem Bremsbetrieb wird Strom von dem Elektromotor erzeugt und dem Batteriesystem zugeführt. Im Freilaufbetrieb ist der Motor von dem Hochstrombatteriesystem entkoppelt. Als Bestandteil der Elektromotorsteuerung sind in einem Elektrofahrzeug die notwendigen Hochleistungselektronikelemente vorhanden.

Im Rahmen der Erfindung wurde erkannt, dass die in dem Fahrzeug vorhandene Hochleistungselektronik der Elektromotorsteuerung verwendet werden kann, um die für die Erfindung erforderliche Entkopplung des Hochstrombatteriesystems von der Last herbeizuführen. Das Abtrennen muss dabei nur für eine Zeitperiode stattfinden, in der ein Umschalten der Bypassschalter und ein Überbrücken der defekten Batteriemodule erfolgen kann. Das kurzzeitige Abtrennen dauert bevorzugt weniger als eine Sekunde, sehr bevorzugt weniger als 100 Millisekunden, besonders bevorzugt weniger als 20 Millisekunden. In der Regel wird es deshalb von dem Benutzer auch nicht oder kaum wahrgenommen, selbst wenn sich das Elektrofahrzeug im Fahrbetrieb befindet.

Alternativ kann in einem Elektrofahrzeug anstelle des vollständigen Abtrennens der Last von dem Hochstrombatteriesystem auch eine Reduktion des Verbraucherstroms durch die Elektromotorsteuerung derart stattfinden, dass der Betriebstrom in dem Hochstrombatteriesystem den erforderlichen Grenzwert unterschreitet. Ein derartiges Begrenzen könnte durch eine Phasenanschnittsteuerung beim Motor, durch eine Stromtaktung oder ein Zerhacken des Stroms oder ähnliche dem Fachmann bekannte Methoden erfolgen.

Im Fahrbetrieb eines Elektrofahrzeugs fließen beim Beschleunigen in der Regel bis zu 400 A Würde man in dem Betriebszustand Fahrbetrieb oder Beschleunigen, also unter Last, einen Bypass schalten, so wäre die Gefahr eines Abrissbogens oder eines Schaltfunkens groß. Das ohnehin schon defekte Batteriemodul mit einer oder mehreren defekten Einzelzellen könnte sich auf Grund der Funkenbildung entzünden und einen größeren Schaden verursachen.

Mittels der erfindungsgemäßen Sicherheitsabschaltung erfolgt das Abschalten eines defekten Batteriemoduls nicht unter Last, sondern in einem Zustand, bei dem der Betriebsstrom in der Betriebsstromleitung gering ist. Bevorzugt ist der Betriebsstrom während des Schaltens des Bypassschalters kleiner 1 A, besonders bevorzugt nahezu Null Ampere. Insbesondere ist das Schalten des Bypassschalters einfacher, da nur kleinere, (weit) unterhalb des Betriebsstroms liegende Ströme geschaltet werden müssen. Jedenfalls soll der Betriebsstrom kleiner als ein vorbestimmter Grenzwert sein, der abhängig von dem eingesetzten Bypassschalter ist.

Das Schalten von kleinen Strömen (unterhalb 1 A) hat den Vorteil, dass kein Lichtbogen oder Schaltbogen auftritt, wie es beim Schalten von hohen Strömen im Bereich von mehreren zehn Ampere oder von mindestens 100 Ampere der Fall ist. Folglich muss auch keine Lichtbogenlöschung erfolgen. In einer bevorzugten Ausführungsform des Hochstrombatteriesystems wird der vorbestimmte Grenzwert des Stromflusses so gewählt, dass er höchstens 0,5 A, bevorzugt höchstens 0,2 A, besonders bevorzugt höchstens 0,1 A ist. Generell ist es auch möglich, den vorbestimmten Grenzwert auf 2 A, 5 A oder 10 A zu bestimmen. Der Bypassschalter ist dann entsprechend anzupassen.

Bei einem vorbestimmten Grenzwert von höchstens 1 A kann ein einfacher Schalter verwendet werden, der kein Hochlast- oder Hochstromschalter sein muss. Da diese einfachen Schalter im Vergleich zu einem Hochlast- oder Hochstromschalter preiswert sind, führt dies zu einer starken Kostenersparnis. Beispielsweise können Magnetschalter, ein einfaches Relais oder andere Einfachschalter verwendet werden. Der Schalter muss lediglich das Kriterium erfüllen, dass er im "Geschlossenzustand", wenn er in der Normalbetriebsstellung oder in der Bypassstellung geschaltet ist, den Betriebsstrom in dem Hochstrombatteriemodul zuverlässig leiten kann, ohne dass Störungen auftreten.

Eine bevorzugte Ausführungsform des erfindungsgemäßen Batteriesystems wird ohne Einschränkung der Allgemeinheit anhand der nachstehenden Figuren näher erläutert. Die darin ausgebildeten Besonderheiten können einzeln oder in Kombination auftreten. Es zeigen:
- Figur 1: eine Übersichtsskizze eines Elektrofahrzeugs mit einem E-lektromotor, einem Hochstrombatteriesystem und einer E-lektromotorsteuerung;
- Figur 2: ein erfindungsgemäßes Hochstrombatteriesystem mit einer Mehrzahl von Batteriemodulen und wenigstens einem By-pass-Batteriemodul;
- Figur 3: eine Detailskizze eines Bypass-Batteriemoduls mit einer Mehrzahl von Einzelzellen;
- Figur 4: das Hochstrombatteriesystem aus Fig. 2 mit angeschlossenem Verbraucher;
- Figur 5: eine alternative Ausführungsform eines Bypass-Batteriemoduls.

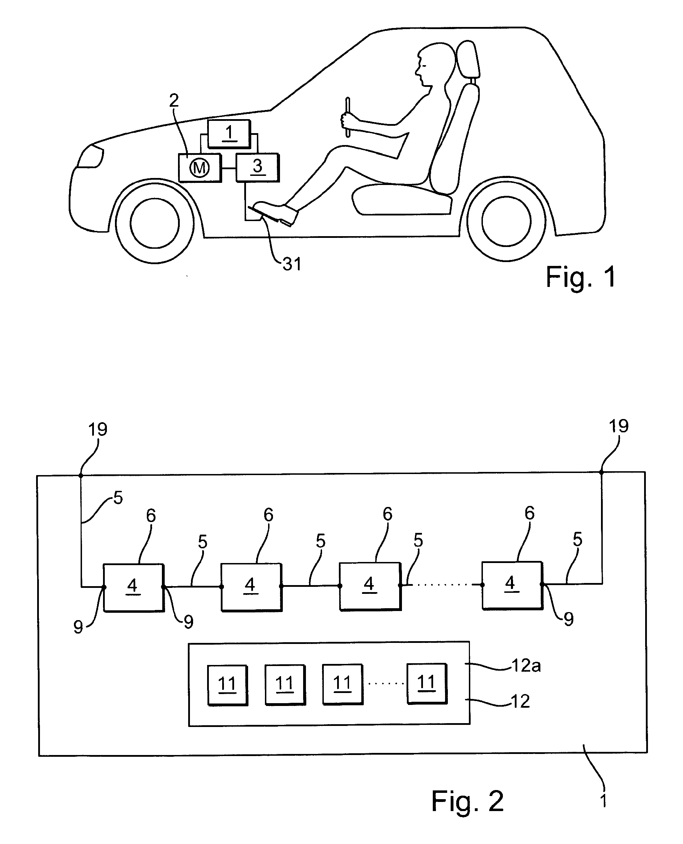

Figur 1 zeigt ein Elektrofahrzeug mit einem erfindungsgemäßen Hochstrombatteriesystem 1, einem Elektromotor 2 und einer Elektromotor-Steuerung 3, die den Elektromotor 2 steuert. Ein Geber 31 für die Elektromotor-Steuerung 3 ist als elektronisches Gaspedal ausgebildet. Der Geber 31 könnte aber auch eine Handsteuerung oder Ähnliches sein. Abhängig von der Stellung des elektronischen "Gaspedals" 31 wird im Betrieb des Elektrofahrzeugs mehr oder weniger Energie aus dem Hochstrombatteriesystem 1 entnommen und dem Elektromotor 2 zugeführt. Der Stromfluss ist entsprechend groß. Beim Erkennen eines Fehlerzustands des Bypass-Batteriemoduls 6 wird bevorzugt ein zwischen dem Hochstrombatteriesystem 1 und dem Elektromotor 2 fließender Verbraucherstrom durch die Elektromotor-Steuerung 3 derart gesteuert, dass ein in einer Betriebsstromleitung 5 des Hochstrombatteriesystems 1 zwischen mehreren Batteriemodulen 4 fließender Strom unterhalb eines vorbestimmten Grenzwerts liegt. Der Verbraucherstrom wird also gedrosselt, um im Folgenden das defekte Batteriemodul abschalten zu können. Auf Grund dieser Steuerung ist es nun möglich, einen während des Fahrbetriebs selbständig auftretenden Betriebszustand, bei dem in dem Hochstrombatteriesystem 1 ein geringer Strom, bevorzugt unter 1 A, fließt, gewollt herbeizuführen. Auf diese Weise kann beim Detektieren eines Fehlerfalls in einem Batteriemodul sofort das fehlerhafte Modul abgeschaltet werden. Es muss nicht abgewartet werden, bis der "Niedrigstromzustand" mit einem Betriebsstrom unterhalb des Grenzwerts von selbst erfolgt.

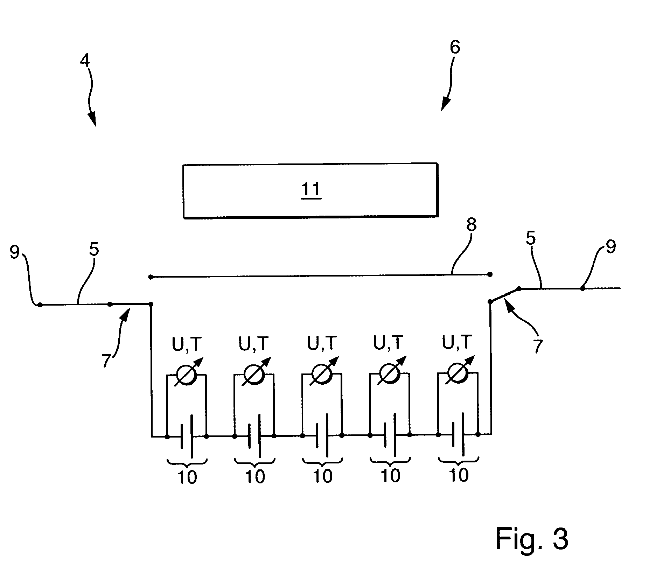

In den Figuren 2 und 3 ist das erfindungsgemäße Hochstrombatteriesystem 1 im Detail gezeigt. Es umfasst eine Mehrzahl von wiederaufladbaren Batteriemodulen 4, die in Reihe geschaltet sind. Eine Betriebsstromleitung 5 verbindet die in Reihe geschalteten Batteriemodule 4, so dass ein Betriebsstrom durch die Batteriemodule 4 fließen kann. Die Batteriemodule bilden einen Modulstrang. In einer alternativen Ausführungsform können mehrere (z. B. zwei) Modulstränge mit einer Mehrzahl von Batteriemodulen 4 parallel geschaltet sein.

Figur 2 zeigt, dass alle Batteriemodule 4 als Bypass-Batteriemodul 6 ausgebildet sind, die je einen Bypassschalter 7 und eine Bypassleitung 8 aufweisen.

Die Bypass-Batteriemodule 6 können mittels des Bypassschalters 7 so umgeschaltet werden, dass in einer Bypassstellung des Schalters 7 der Betriebsstrom in der Betriebsstromleitung 5 durch die Bypassleitung 8 fließt und das Bypass-Batteriemodul 6 überbrückt ist, wenn ein Fehlerzustand in dem Bypass-Batteriemodul 6 auftritt und erkannt wird (Fig. 3).

In einer bevorzugten Ausführungsform weist das Hochstrombatteriesystem 1 mindestens drei, bevorzugt mindestens fünf Bypass-Batteriemodule 6 auf. Besonders bevorzugt ist eine Ausführungsform, mit mindestens zehn Bypass-Batteriemodulen 6. Für den praktischen Einsatz in einem Elektrofahrzeug hat sich eine Anzahl von 16 Bypass-Batteriemodulen in einem Hochstrombatteriesystem bewährt. Je höher die Anzahl der in Reihe geschalteten Bypass-Batteriemodule 6 ist, desto geringer sind die Auswirkungen eines fehlerhaften und überbrückten Batteriemoduls 6. Die Gesamtkapazität des Hochstrombatteriesystems 1 reduziert sich im Verhältnis der defekten Bypass-Batteriemodule 6. Das erfindungsgemäße Hochstrombatteriesystem 1 weist den Vorteil auf, dass neben einer einfachen Überwachung der einzelnen Batteriemodule 6 auch eine problemlose Fortsetzung des Fahrzeugbetriebs möglich ist, wenn nur eines oder wenige der Batteriemodule 6 ausfällt.

In einer bevorzugten Ausführungsform weisen die Batteriemodule 4 eine Mehrzahl von Batteriezellen 10 auf, die in Reihe geschaltet sind. Bevorzugt ist eine Ausführungsform mit sechs Batteriezellen 10 (Fig. 3). Die Spannung der einzelnen Batteriezellen 10 ist bevorzugt derart auszuwählen, dass das Batteriemodul insgesamt eine Spannung von kleiner 25 V aufweist. Beispielsweise kann jede der Zellen eine Spannung von 4 V aufweisen, wenn insgesamt sechs Batteriezellen 10 in einem Modul zusammengefasst sind. Selbstverständlich sind auch andere Spannungen und/oder eine andere Anzahl von Batteriezellen möglich. Wichtig ist, dass die Spannung insgesamt unter 25 V bleibt, damit das Batteriemodul nur eine Sicherheitskleinspannung (Safety Extra Low Voltage SELV) aufweist, damit Servicetechniker oder im Falle eines Unfalls z. B. Bergungsfachleute gefahrlos die Batteriemodule untersuchen können. Vorzugsweise können alle Bypassschaltungen von einem Servicetechniker ausgelöst werden, so dass das Hochstrombatteriesystem nur noch einzelne, voneinander getrennte Batteriemodule aufweist, deren Spannung kleiner 25 V ist. Im Falle eines Unfalls sollten die Bypassschaltung automatisch ausgelöst werden, um die Module voneinander zu trennen. Dies kann beispielsweise an die Airbagauslösung gekoppelt sein.

An zwei Anschlussklemmen 9 des Bypass-Batteriemoduls 6, die es mit der Betriebsstromleitung 5 verbinden, ist bevorzugt jeweils ein Bypassschalter 7 angeordnet, der als Umschalter ausgeführt ist. Parallel zu den Batteriezellen 10 des Bypass-Batteriemoduls 6 ist die Bypassleitung 8 geführt. Wird ein Fehler in dem Bypass-Batteriemodul 6 detektiert und ist der Betrag des in der Betriebsstromleitung 5 fließenden Stroms kleiner als der vorbestimmte Grenzwert, so werden die beiden Bypassschalter 7 von der hier gezeigten Normalbetriebsstellung in die Bypassstellung umgeschaltet, in der die beiden Schalter 7 die Bypassleitung 8 mit der Betriebsstromleitung 5 verbinden. Der Betrag des Grenzwertes ist abhängig von dem maximalen Schaltstrom des Bypassschalters 7, bei dem ein zuverlässiges Schalten des gewählten Schalters 7 möglich ist, ohne dass er beschädigt wird (beispielsweise durch Erhitzen) und ohne dass ein Schaltfunken oder ein Abrisslichtbogen entsteht.

Selbstverständlich ist es möglich, das Bypass-Batteriemodul 6 mit nur einem Bypassschalter 7 auszuführen. Der zweite Bypassschalter 7 wird dann durch ein Leitungsstück ersetzt, bei dem die Bypassleitung 8 an der Anschlussklemme 9 des Batteriemoduls 6 mit der Betriebsstromleitung 5 verbunden ist

Die Modulüberwachungseinheiten 11 des Hochstrombatteriesystems 1 bilden eine Batteriesystemüberwachungselektronik 12. In der Ausführungsform des Hochstrombatteriesystems 1 gemäß Fig. 2 sind die Modulüberwachungseinheiten 11 der Bypass-Batteriemodule 6 (bis auf die notwendigen Sensoren) in einer Zentraleinheit 12a der Batteriesystemüberwachungselektronik 12 integriert. Bei Detektion eines Fehlerzustands eines Batteriemoduls 4 misst die Batteriesystemüberwachungselektronik 12 den Stromfluss in der Betriebsstromleitung 5. Die Strommessung kann an einer beliebigen Stelle der Batteriestromleitung 5 erfolgen, also z. B. zwischen zwei benachbarten Batteriemodulen 4 oder zwischen einer Anschlussklemme 19 des Hochstrombatteriesystems 1 und einem Batteriemodul 4.

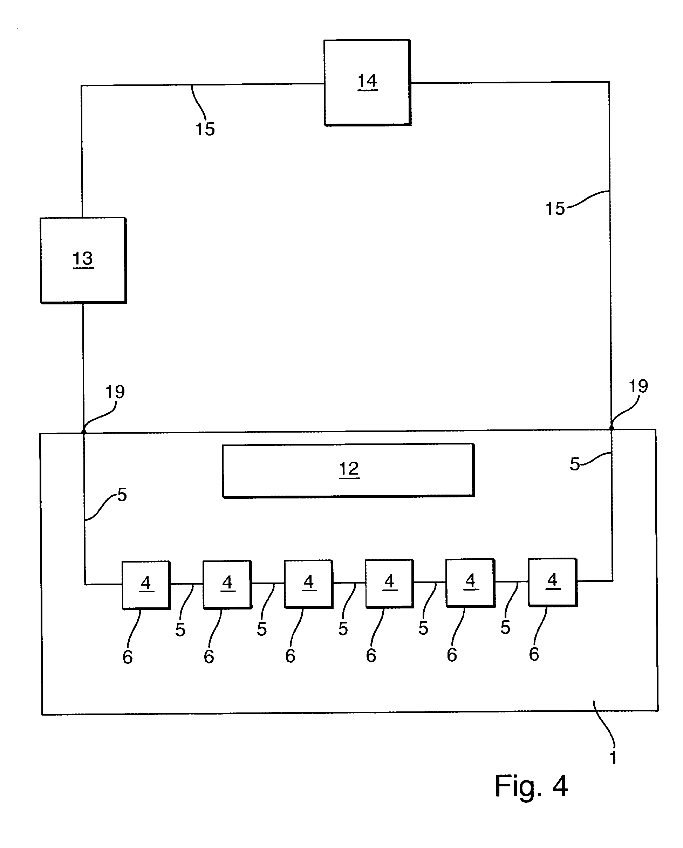

In einer bevorzugten Ausführungsform gemäß Fig. 4 weist das Hochstrombatteriesystem 1 eine Verbraucherstromsteuerung 13 auf, die den Stromfluss durch einen mittels einer Verbraucherstromleitung 15 an das Hochstrombatteriesystem 1 angeschlossenen Verbraucher 14 steuert. Bei Detektion eines Fehlerzustands in einem der Bypass-Batteriemodule 6 wird der Stromfluss in der Verbraucherstromleitung 15 derart gesteuert, dass der Stromfluss in der Betriebsstromleitung 5 kleiner als der vorbestimmte Grenzwert ist, so dass der Bypassschalter 7 des defekten Moduls 6 geschaltet werden kann. Bei einem Einsatz des Hochstrombatteriesystems 1 in einem Elektrofahrzeug ist die Verbraucherstromsteuerung 13 die Elektromotorsteuerung 3. Der Verbraucher 14 ist der Elektromotor 2, so dass die Elektromotorsteuerung 3 den Stromfluss in und aus dem Elektromotor 2 entsprechend regelt. Die Kommunikation zwischen der Batteriesystemüberwachungselektronik 12, den Modulüberwachungseinheiten 11, den Bypassschaltem 7, der Verbraucherstromsteuerung 13 und/oder der Elektromotorsteuerung 3 findet beispielsweise über ein Bussystem (z. B. CAN-Bus) oder andere Signalleitungen statt.

Wie in Figur 3 dargestellt, wird jede der Batteriezellen 10 von einer Modulüberwachungseinheit 11 überwacht, die optional an dem jeweiligen Modul angeordnet sein kann. Zur Überwachung des Bypass-Batteriemoduls 6 werden in den Batteriezellen 10 z. B. die Spannung und die Temperatur gemessen, um den Zustand des Bypass-Batteriemoduls 6 bzw. der Batteriezelle 10 zu überprüfen. Alternativ können nur einige der Batteriezellen 10 oder nur das gesamte Bypass-Batteriemodul 6 überwacht werden. Im Fall der Überwachung des Bypass-Batteriemoduls 6 werden zum Beispiel die Temperatur, die Spannung oder der Strom des Batteriemoduls 6 erfasst. Derartige und ähnliche Überwachungsschaltungen sind beispielsweise in DE 10 2004 013 351 A1 beschrieben. Die Modulüberwachungseinheit 11 kann z.B. auch den Strom in der Betriebstromleitung 8 messen und/oder den Bypassschalter 7 steuern.

Im Rahmen der Erfindung können unterschiedliche Batteriezellen 10 als Bestandteile der Batteriemodule 4 verwendet werden. Bevorzugt kommen Alkalimetallzellen zum Einsatz, insbesondere Zellen, deren aktives Metall Lithium ist. Die vielfach gebräuchlichen Lithium-lonen-Batteriezellen können vorteilhaft eingesetzt werden. Besonders bevorzugt sind jedoch Lithiumzellen oder andere Alkalimetallzellen, deren Elektrolyt auf SO₂ basiert. Sie zeichnen sich gegenüber den üblichen, mit organischen Elektrolyten arbeitenden Lithium-lonen-Zellen unter anderem durch eine erhöhte Funktionssicherheit aus. Nähere Einzelheiten sind in der einschlägigen Literatur beschrieben, wobei beispielsweise auf die WO 2005/031908, die WO 2009/077140, die WO 2000/79631 und die darin zitierten Dokumente verwiesen werden kann.

In einer bevorzugten Ausführungsform ist das Hochstrombatteriesystem 1 derart ausgebildet, dass die Batteriezellen 10 der einzelnen Batteriemodule 4 eine Elektrolytlösung enthalten, die auf SO₂ basieren. Derartige Zellen zeichnen sich durch die Unbrennbarkeit der Elektrolytlösung und anderer Bestandteile des Batteriesystems aus. Selbst bei sicherheitskritischen Zuständen entzündet sich die Zelle nicht. Vorteilhaft bei SO₂-Batteriezellen erweist sich auch, dass selbst bei einer Tiefentladung oder bei Umkehr der Polarität einer Einzelzelle keine sicherheitskritischen Zustände auftreten.

Beim Überladen gebildete Reaktionsprodukte werden reversibel zu Bestandteilen der Elektrolytlösung zurückgebildet, so dass eine Batteriezelle 10 bis zu einem gewissen Grad überladen werden kann, ohne dass eine sofortige Abschaltung des Moduls erfolgen muss. Darüber hinaus kann ein Modul mit einer fehlerhaften Zelle 10 auch nach einer gewissen Ruhezeit, in der es aus dem Hochstrombatteriesystem 1 abgeschaltet war, in den Stromkreis wieder eingeschaltet werden, da eine Art Selbstheilung entsteht. Bevorzugt erkennt die Batteriesystemüberwachungselektronik 12 und/oder die Modulüberwachungseinheit 11, dass die Zelle wieder funktionsfähig ist und schaltet den Bypassschalter 7 wieder in Normalbetriebsstellung und somit das Bypass-Batteriemodul 6 wieder in den Stromkreis des Hochstrombatteriesystems 1. Dieses Umschalten erfolgt ebenfalls erst, wenn der Betriebsstrom in der Betriebsstromleitung 5 unterhalb des Grenzwerts liegt.

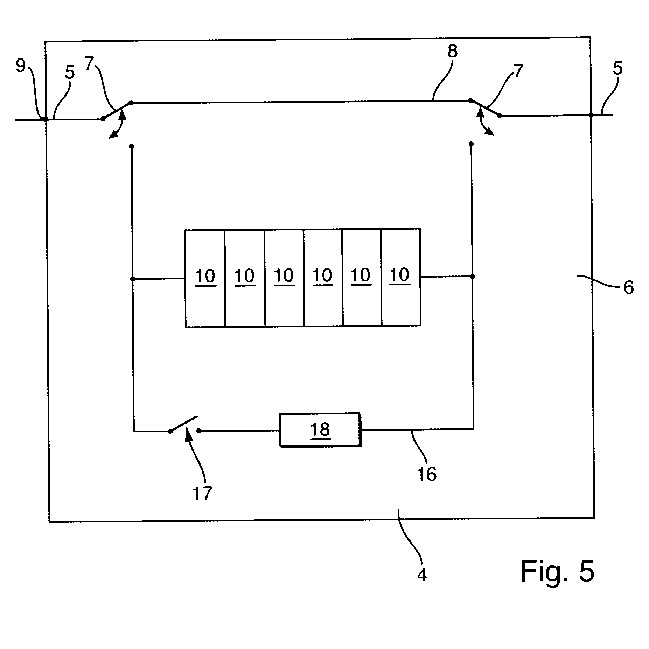

Im Rahmen der Erfindung wurde erkannt, dass derartige Batteriesysteme mit SO₂-Batteriezellen auch "energielos" geschaltet werden können. In einer bevorzugten Ausführungsform gemäß Fig. 5 weist das Bypass-Batteriemodul 6 eine parallel zu dem Modul 6 geschaltete Entladeleitung 16 auf, die einen Entladeschalter 17 und einen Entladewiderstand 18 umfasst. Diese Entladeschaltung kann in das Bypass-Batteriemodul 6 integriert sein. Sobald der Entladeschalter 17 geschlossen ist, wird das Batteriemodul 4 über den Entladewiderstand 18 entladen, bis die Spannung in dem Batteriemodul 4 auf 0 V reduziert ist. Die Kapazität des Batteriemoduls 6 wird über den Entladewiderstand 18 entladen, wobei die vorhandene Energie in Wärme umgewandelt wird. Der Entladewiderstand 18 ist derart auszuwählen, dass die dabei auftretende Wärme abgeleitet werden kann (ohne dass der Widerstand zerstört wird).

Durch diesen energielosen Zustand des Batteriemoduls 6 ist ein gefahrloser Umgang mit dem Modul 6 möglich. Beim Einsatz in Elektrofahrzeugen können vor einem Austausch der Batterie oder vor Arbeiten an dem Elektrofahrzeug die einzelnen Module spannungsfrei geschaltet werden. Unbeabsichtigte Kurzschlüsse, beispielsweise beim Einbauen oder Ausbauen können nicht mehr entstehen. Das Hochstrombatteriesystem 1 hat den Vorteil, dass es im Falle eines Unfalls durch die Entladeschaltung insgesamt stromlos geschaltet werden kann. Auch beim Transport können keine sicherheitskritischen Zustände auftreten, da keine Spannung an den Batteriemodulen 4 anliegt. Die Sicherheit dieser Module 4 ist sehr hoch, was insbesondere für den Lufttransport vorteilhaft ist.

In einer bevorzugten Ausführungsform wird der Entladeschalter 17 nur dann geschlossen, wenn der Bypassschalter 7 in der Bypassstellung geschaltet ist und das Batteriemodul 6 von dem Stromkreis des Hochstrombatteriesystems 1 entkoppelt ist. Folglich wird vor dem Schalten des Entladeschalters 17 überprüft, ob der Bypassschalter 7 in der Bypassstellung geschaltet ist, wie in Fig. 5 gezeigt. Erst dann findet ein Schalten des Entladeschalters 17 in eine Geschlossenstellung statt.

## Patentansprüche

1. Hochstrombatteriesystem, in dem ein hoher Betriebsstrom fließt, insbesondere für Fahrzeugantriebe, mit
- einer Batteriesystemüberwachungselektronik (12) und
- einer Mehrzahl von Batteriemodulen (4), die jeweils mindestens eine wiederaufladbare Batteriezelle (10) einschließen und die derartig mittels einer Betriebsstromleitung (5) elektrisch in Reihe geschaltet sind, dass im Betrieb ein Betriebsstrom durch die Betriebsstromleitung (5) fließt,
wobei
mindestens eines der Batteriemodule (4) als Bypass-Batteriemodul (6) ausgebildet ist, das einen Bypassschalter (7) und eine Bypassleitung (8)
aufweist, die so ausgebildet und angeordnet sind, dass nach Umschalten des Bypassschalters (7) von einer Normalbetriebsstellung in eine Bypassstellung das Batteriemodul (4) durch die Bypassleitung (8) elektrisch überbrückt ist, so dass der Betriebsstrom durch die Bypassleitung (8) fließt,
die Batteriesystemüberwachungselektronik (12) für jedes Bypass-Batteriemodul (6) eine Modulüberwachungseinheit (11) einschließt, die das Batteriemodul (4) überwacht und einen Fehlerzustand des Batteriemoduls (4) detektiert, und
die Batteriesystemüberwachungselektronik (12) bei Detektion eines Fehlerzustands eines Batteriemoduls (4) durch eine der Modulüberwachungseinheiten (11) den Stromfluss in der Betriebsstromleitung (5) misst und den Bypassschalter (7) des betreffenden Batteriemoduls (4) von der Normalbetriebsstellung in die Bypassstellung zu einem Zeitpunkt umschaltet, zu dem der Stromfluss in der Betriebsstromleitung (5) kleiner als ein vorbestimmter Grenzwert ist.

2. Hochstrombatteriesystem nach Anspruch 1, **dadurch gekennzeichnet, dass** die Modulüberwachungseinheit (11) in der Batterieuberwachungselektronik (12) integriert ist.

3. Batteriesystem nach Anspruch 1 oder 2, **dadurch gekennzeichnet, dass** das Batteriemodul (4) eine Mehrzahl von Batteriezellen (10), bevorzugt sechs Batteriezellen (10), einschließt, die in Reihe geschaltet sind.

4. Hochstrombatteriesystem nach einem der vorhergehenden Ansprüche, **dadurch gekennzeichnet, dass** es mindestens drei, bevorzugt mindestens fünf Bypass-Batteriemodule (6), besonders bevorzugt mindestens zehn Bypass-Batteriemodule (6) einschließt.

5. Hochstrombatteriesystem nach einem der vorhergehenden Ansprüche, **dadurch gekennzeichnet, dass** der vorbestimmte Grenzwert des Stromflusses höchstens 1 A, bevorzugt höchstens 0.5 A, besonders bevorzugt höchstens 0,1 A ist.

6. Hochstrombatteriesystem nach einem der vorhergehenden Ansprüche, **dadurch gekennzeichnet, dass** der Bypassschalter (7) ein magnetischer Schalter ist.

7. Hochstrombatteriesystem nach einem der vorhergehenden Ansprüche, **dadurch gekennzeichnet, dass** die Batteriezelle (10) eine Elektrolytlösung enthält, die auf SO₂ basiert.

8. Hochstrombatteriesystem nach einem der vorhergehenden Ansprüche, **dadurch gekennzeichnet, dass** das Batteriemodul (4) eine parallel zu dem Batteriemodul (4) geschaltete Entladeleitung (16) mit einem Entladewiderstand (18) und einem Entladeschalter (17) umfasst.

9. Hochstrombatteriesystem nach Anspruch 8, **dadurch gekennzeichnet, dass** die Entladeleitung (16) durch den Entladeschalter (17) nur dann geschlossen wird, wenn der Bypassschalter (7) in der Bypassstellung ist und das Batteriemodul (4) durch die Bypassleitung (8) elektrisch überbrückt ist, so dass der Betriebsstrom durch die Bypassleitung (8) fließt.

10. Hochstrombatteriesystem nach einem der vorhergehenden Ansprüche, **gekennzeichnet durch** eine Verbraucherstromsteuerung (13) zur Steuerung des Stromflusses **durch** einen an das Hochstrombatteriesystem (1) angeschlossenen Verbraucher (14) derart, dass der Stromfluss **durch** die Betriebsstromleitung (5) des Hochstrombatteriesystems (1) kleiner als der vorbestimmte Grenzwert ist.

11. Elektrofahrzeug mit einem Elektromotor (2), einer Elektromotor-Steuerung (3) zur Steuerung des Elektromotors (2) und mit einem Hochstrombatteriesystem (1), **dadurch gekennzeichnet, dass** das Hochstrombatteriesystem (1) nach einem der vorhergehenden Ansprüche ausgebildet ist.

12. Elektrofahrzeug nach Anspruch 11, **dadurch gekennzeichnet, dass** durch die Elektromotor-Steuerung (3) ein zwischen dem Hochstrombatteriesystem (1) und dem Elektromotor (2) fließende Verbraucherstrom so steuerbar ist, dass der in der Betriebsstromleitung (5) des Hochstrombatteriesystems (1) fließende Strom unterhalb des vorbestimmten Grenzwerts liegt.

13. Verfahren zur Steuerung eines Hochstrombatteriesystems, insbesondere eines Hochstrombatteriesystems nach einem der Ansprüche 1 bis 10, mit
einer Batteneüberwachungselektronik (12) und
einer Mehrzahl von Batteriemodulen (4), die jeweils mindestens eine wiederaufladbare Batteriezelle (10) einschließen und die derartig mittels einer Betriebsstromleitung (5) elektrisch in Reihe geschaltet sind, dass im Betrieb ein Betriebsstrom durch die Betriebsstromleitung (8) fließt,
wobei
mindestens eines der Batteriemodule (4) als Bypass-Batteriemodul (6) ausgebildet ist, das einen Bypassschalter (7) und eine mit dem Batteriemodul (4) parallel geschaltete Bypassleitung (8) aufweist, und
das Hochstrombatteriesystem (1) für jedes Bypass-Batteriemodul (6) eine Modulüberwachungseinheit (11) umfasst,
**gekennzeichnet durch** die folgenden Schritte:
a) Überwachen des Batteriemoduls (4) mittels der Modulüberwachungseinheit (11);
b) Detektieren eines Fehlerzustands des Batteriemoduls (4);
c) Messen des Stromflusses in der Betriebsstromleitung (5) **durch** die Batteriesystemüberwachungselektronik (12), wenn ein Fehlerzustand eines Batteriemoduls (4) **durch** eine der Modulüberwachungseinheiten (11) detektiert wird;
d) Überprüfen, ob der gemessene Stromfluss in der Betriebsstromleitung (5) kleiner ist als ein vorbestimmter Grenzwert;
e) wenn der gemessene Stromfluss kleiner als der Grenzwert ist, Schalten des Bypassschalters (7) von einer Normalbetriebsstellung in eine Bypassstellung derart, dass das Batteriemodul (4), bei dem ein Fehlerzustand detektiert wurde, **durch** die Bypassleitung (8) elektrisch überbrückt wird und der Betriebsstrom **durch** die Bypassleitung (8) fließt.

14. Verfahren zur Steuerung eines Hochstrombatteriesystems nach Anspruch 13, wobei das Hochstrombatteriesystem (1) eine Verbraucherstromsteuerung (13) zur Steuerung des Stromflusses durch einen an das Hochstrombatteriesystem (1) angeschlossenen Verbraucher (14) umfasst,
**gekennzeichnet durch** den weiteren Schritt:
Begrenzen des Stromflusses in dem Hochspannungsbatteriesystem (1) **durch** die Verbraucherstromsteuerung (13) derart, dass der Stromfluss in der Betriebsstromleitung (5) des Hochstrombatteriesystems (1) kleiner als der vorbestimmte Grenzwert ist.

15. Verfahren nach Anspruch 13 oder 14, wobei das Batteriemodul (4) einen Entladeschalter (17) und einen in einer elektrisch zu dem Batteriemodul (4) parallelen Entladeleitung (16) angeordneten Entladewiderstand (18) umfasst und der Entladeschalter (17) in der Entladeleitung (16) angeordnet ist,
**gekennzeichnet durch** den weiteren Schritt:
Überprüfen, ob der Bypass-Schalter (7) derart in die Bypassstellung geschaltet ist, dass das Batteriemodul (4) **durch** die Bypassleitung (8) elektrisch überbrückt ist und der Betriebsstrom **durch** die Bypassleitung (8) fließt;
Schalten des Entladeschalters (17) in eine Geschlossenstellung derart, dass der Stromkreis **durch** die Entladeleitung (16) geschlossen ist;
Entladen des Batteriemoduls (4) über den Entladewiderstand (17) mittels eines Stromflusses aus dem Batteriemodul (4) in den Entladewiderstand (18).
